# EUROPEAN PATENT SPECIFICATION

(11) **EP 3 113 169 B1**
(45) Date of publication and mention of the grant of the patent: **14.11.2018**
(21) Application number: 15175034.6
(22) Date of filing: 02.07.2015
(51) Int. Cl.: G09G 5/00, G09G 5/36, G06F 9/44, G06F 3/14

(54) **METHOD FOR CONTROLLING A GRAPHIC PROCESSING UNIT IN A CONTROL UNIT, IN PARTICULAR OF A VEHICLE, COMPUTER PROGRAM PRODUCT AND SYSTEM FOR AN EMBEDDED CONTROL UNIT**
VERFAHREN ZUR STEUERUNG EINER GRAFIKVERARBEITUNGSEINHEIT IN EINER STEUERUNGSEINHEIT, INSBESONDERE EINES FAHRZEUGS, COMPUTERPROGRAMMPRODUKT UND SYSTEM FÜR EINE EINGEBETTETE STEUERUNGSEINHEIT
PROCÉDÉ POUR COMMANDER UNE UNITÉ DE TRAITEMENT GRAPHIQUE DANS UNE UNITÉ DE COMMANDE, EN PARTICULIER D'UN VÉHICULE, PRODUIT DE PROGRAMME INFORMATIQUE ET SYSTÈME POUR UNE UNITÉ DE COMMANDE EMBARQUÉE

(43) Date of publication of application: 04.01.2017
(73) Proprietor: OpenSynergy GmbH, 10245 Berlin (DE)
(72) Inventor: TRETTER, Michael, 10245 Berlin (DE); BORKAR, Parag, 13088 Berlin (DE)
(74) Representative: Lavoix

(56) References cited:
- EP-A2- 0 867 809
- JP-A- 2013 008 188
- US-A1- 2005 251 806
- US-A1- 2009 204 290
- US-A1- 2012 216 193
- US-A1- 2014 022 266

## Description

The present invention concerns method for controlling a graphic processing unit in a control unit, in particular of a vehicle.

Further, the present invention concerns a computer program product comprising commands for executing such a method, when loaded and executed on one or more processors.

Additionally, the invention concerns a system for an embedded control unit, in particular of a vehicle.

EP 0 867 809 A2 relates to an information processing apparatus, assigning priorities to a plurality of CPUs and the CPUs transfer their respective display lists of drawing instructions to a drawing unit on a priority basis.

US 2005/0251806 A1 concerns a system, method and computer program product for enhancing a real-time operating system (RTOS) with functionality normally associated with a general purpose operating system (GPOS).

US 2012/0216193 A1 concerns a virtualization apparatus. The virtualization apparatus includes a plurality of VMs, a process scheduler configured to schedule processes to be executed on the respective virtual machines, a VMM configured to provide each of the VM with a virtualization execution environment, a virtual machine scheduler configured to schedule the virtual machines to run in the virtual machine monitor, and a synchronization unit configured to synchronize a process schedule time.

US 2009/0204290 A1 concerns an instrument panel display system including a liquid crystal panel and a liquid crystal controller arranged to generate display data to be inputted into the liquid crystal panel.

Typically systems of embedded control units (ECU) in the automotive industry may use several partitions running on a hypervisor. The ECU is connected to a display using a graphics processing unit (GPU) to accelerate the rendering of display content. One partition may provide multimedia content to the display and another partition may more relate to automotive applications which provide time critical information to the display. The time critical information has a higher priority than the multimedia content, needs a guaranteed display within a specific time frame of the time critical information. Typically, time critical applications and multimedia applications cannot share a GPU.

Object of the invention is to improve the display of time critical content on a display. In light of the above, a method is provided according to claim 1.

According to particular embodiments, the method may have the following features, which may be combined in any technical feasible combination:
- Running a virtualization layer on the at least one CPU, the virtualization layer assigning processor time and memory space to a plurality of guest systems, running a first guest system on the virtualization layer, the first application running in the first guest system; and running a second guest system on the virtualization layer, the second application running in the second guest system;
- the second guest system is a real time operating system, in particular an automotive operating system;
- the first guest system is a non-real time operating system ;
- the method further comprises running a third guest system on the virtualizing layer, wherein the GPU server is running on the third guest system, the first and second applications connecting the GPU server via at least one inter partition communication, in particular via a respective virtual graphic driver running in the respective first and second guest systems;
- the predetermined output display frame rate is at least 50 frames per second;
- the time required to finalize and send the time critical graphical output to the at least one display (13) includes at least
   a time to bring the GPU into a state that allows to render the time critical graphical output, for example a time to detect the graphical output currently rendered, a time (t_{td}) to suspend or terminate the low priority graphical output and/or the time (tᵣᵤ) to setup the GPU to be able to run the time critical graphical output, and/or
   the time (t_{IC}) to render the time critical graphical output;
- forcing, by the GPU server, the GPU to render the time critical graphical output, includes: suspending and/or terminating a rendering of the low priority graphical output; and/or resetting the GPU;
- The method further comprises: providing the time critical graphical output to the at least one display; and/or
- the time critical graphical output includes information about the current or future state of a vehicle, in particular an automotive vehicle, comprising the graphic processing unit, wherein, in particular the information includes, a speed of the vehicle, a temperature of a working fluid, a distance to an obstacle, a warning about a malfunction, a rotational speed of a motor and/or a liquid level.

Computer program product comprising commands for executing the method according any one of the preceding claims, when loaded and executed on one or more CPUs. According to a further aspect, a computer program product is provided comprising commands for executing the method according an embodiment disclosed herein, when loaded and executed on a computer. According to an embodiment a computer program product may be a physical software product, for example a hard disc, a solid state disc, a CD-ROM, a DVD, comprising the program.

According to other aspects, the present invention relates to non-volatile memory, for example a hard disc, a solid state disc, a CD-ROM, a DVD, including a program containing commands for executing the method according an embodiment disclosed herein, when loaded and executed on a processor.

In light of the above, a system for a control unit is provided according to claim 12.

Finally, the invention provides an automotive vehicle including a system according to an embodiment disclosed herein.

So that the manner in which the above recited features of the present invention can be understood in detail, a more particular description of the invention, briefly summarized above, may be read by reference to embodiments. The accompanying drawings relate to embodiments of the invention and are described in the following:
Fig. 1 shows schematically the hardware of an electronic control unit (ECU);
Fig. 2 shows schematically the system of the ECU;
Fig. 3 shows schematically the flow chart of a method according to the invention; and
Fig. 4 shows schematically a time line of frames displayed on at least one display.

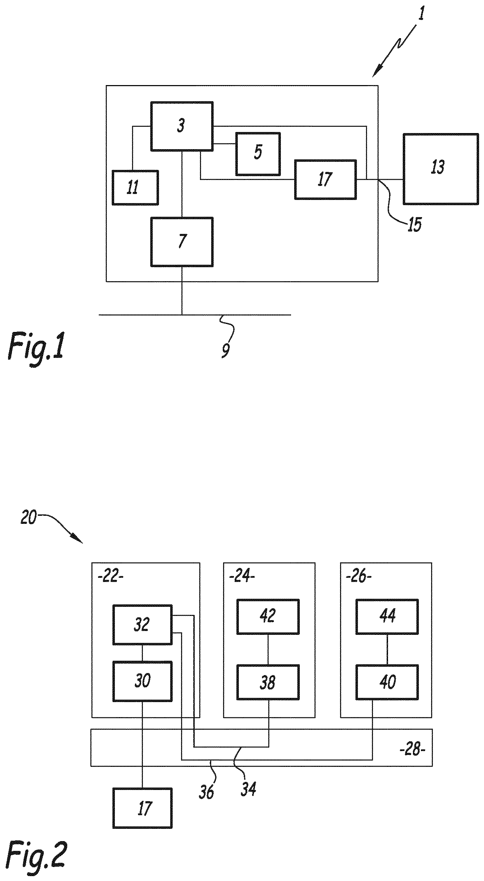

Figure 1 shows schematically an electronic control unit (ECU) 1. The ECU 1 might be also called control unit in the present patent application. For example, the ECU 1 is realized as a system on chip (SoC). According to an embodiment, an ECU comprises one or more processors 3 forming at least one central processing unit (CPU) connected to one or more memories 5. Further, the ECU 1 may comprise interface for connecting to one or more bus systems, for example one or more hardware controller 7 for at least one controller area network (CAN) bus 9 and/or one or more hardware controller for at least one FlexRay bus (not shown). CAN and FlexRay bus systems are dedicated for use in automotive vehicles.

Usually, an automotive vehicle comprises a plurality of electronic control units 1 (ECU), which may be assigned to different units of the vehicle, for example the steering wheel, the brakes, the windows, the motor etc. For example, the ECU may be connected to some sensors or drivers via an interface, for example to drive the window, or to sense the angulation of the steering wheel, the level of oil or water in the motor. Some ECUs are providing information for the user of the vehicle, for example information about the status of the vehicle, for example the angulation of the steering wheel, temperature information, the use the status of the vehicle to display enhanced information, and the like. These ECUs may be connected to one or more displays 13 via one or more display ports 15.

Further, the ECU 1 includes a graphics processing unit (GPU) 17. The graphics processing unit (GPU) 17 is a device specifically adapted for calculating and/or rendering graphics, for example two or three dimensional graphics. For that purpose the GPU 17 has a highly parallel structure, where processing of data is done in parallel. According to an embodiment, the GPU 17 is separated from the one or more CPUs 3. In other embodiments, the GPU 17 is integrated into the one or more CPUs 3. Typically, a GPU 17 sends a rendered frame to the one or more displays 13, for example directly or via a further display controller, which for example performs some post processing of the rendered frame.

According to an embodiment, rendering is the process for generating an image or a frame for the one or more displays. For example models or scene files, which are a virtual model defining the characteristics of objects and lights, are used as a basis for rendering the frame. For example during rendering, it is determined which objects are visible for the observer, whether the objects are shaded or not, the light distribution within the scene etc.

Rendering includes calculations, which vary according to the size and the complexity of a scene. Thus, the time for rendering the scene is variable.

The one or more CPUs 3 may alternatively also directly drive the at least one display 13. Therefore, the at least one CPU 3 is also connected to the display port 15.

Figure 2 shows schematically a system 20 of the ECU 1 running on the at least one CPU 5.

The system 20 comprises a plurality of guest systems 22, 24, 26, for example guest operating systems, each running on a separate partition. The guest systems 22, 24, 26 are running via a virtualization layer 28, for example a microkernel or a hypervisor, on the at least one CPU 3 of the ECU 1. In other words, the virtualization layer 28 enables several operating systems to run on the one or more processors 3.

One example of a virtualization layer 28 is a hypervisor between the hardware, for example a system on chip (SoC), and guest systems 22, 24, 26. The hypervisor runs directly on the hardware, in particular a processor 3, to control the hardware and manages the guest systems. The hypervisor provides and defines a simulated hardware of guest systems installed. Further, the hypervisor assigns the hardware resources to the respective guest systems.

Another example of a virtualization layer 28 is a microkernel operating system, which is used as a virtualization layer between the hardware and guest systems. The microkernel runs directly on the hardware. A microkernel is a minimal operating system construct, which makes mechanisms available in order to implement operating system services. This comprises substantially: the management of the address space, the provision and management of mechanisms for separating program sections and their thread management and scheduling, and mechanisms for communication between different guest systems or partitions (inter-partition-communication (IPC)).

The virtualization layer 28 is adapted to assign the hardware resources to the respective guest systems and to provide inter partition communication (IPC) links between the different guest systems 22, 24, 26.

The system includes a first guest system 22 including a hardware driver 30 for the GPU 17. In an embodiment, the hardware driver 30 has direct access to the GPU 17. In other words, the virtualization layer does not provide a further driver layer between the GPU 17 and the hardware driver 30 and enables direct access for the hardware driver 30 to the GPU 17 without simulating a hardware or transforming an address space. It enables that the hardware driver 30 can directly address commands to the GPU 17

Further, in an example, the hardware driver 30 has also exclusive access to the GPU 17 and therefore controls the GPU 17. In other words, no other drivers in the system 20 have access to the GPU 17.

Further, the guest system 22 includes a GPU server 32 managing the access to the hardware driver 30 and therefore to the GPU 17. In other words, the GPU server 32 has exclusive access to the GPU 17, in particular via the hardware driver 30, and controls the GPU 17. The GPU server 32 is connected via inter partition communication (IPC) links 34, 36 to virtual GPU drivers 38, 40 in respectively a second guest system 24 and a third guest system 26. In other embodiments, even more guest systems like the second guest and/or third guest systems are provided.

The second guest system 24 is, according to an embodiment, a low priority open platform. The second guest system has no real time requirements. For example, the operating system may be an open platform system, like Android or Linux.

An application 42 running on the second guest system 24 may require a hardware acceleration for its graphical output. The application 42 may be for example an infotainment application, for example displaying 2D or 3D maps, augmented reality, etc. For example, the visualization of 3D graphics might need hardware acceleration of the GPU 17. The 3D graphics may be used, for example, to display maps or other infotainment applications.

The third guest system 26 is according to an embodiment a real time operating system. For example, a real time (operating) system has predefined or guaranteed response times. According to an embodiment, they may have predictable response times and behavior, in particular for the scheduling and the memory management.

For example, the real time operating system is a statically configured system. In other words, the operating system is not changed during runtime. In other embodiments, the entire third guest system 26, including the applications, is statically configured. In other words, the third guest system 26 is not changed during runtime.

In the third guest system 26, an application 44 is running. In an embodiment, the application may relate to the current or future state of the automotive vehicle. For example, the application is dedicated to wherein the time critical graphical output includes information about a speed of the vehicle, a temperature of a working fluid, a distance to an obstacle, a warning about a malfunction, a rotational speed of a motor and/or a liquid level. This information is required to be displayed within a specific time limit to the user of the vehicle. For example, an automotive manufacturer may require that specific information is displayed at the next frame sent to the display 13.

According to an embodiment, the display has a specific predetermined frame rate. The frame rate may be, for example 60 frames per seconds. In other embodiments, the frame rate may be 50 frames per second or higher. Therefore a new rendered image or frame is displayed every 1/50 seconds or higher, in particular at every 1/60 seconds.

As it can be seen from Figure 2, the second and the third guest partitions 24, 26 are able to send concurrently a graphical output via the GPU server 30 to the GPU 17. The commands to display a graphical output, in particular of the application 42 or 44, have an arbitrary rendering time in the GPU 17, which cannot be determined beforehand.

The GPU server 32 is adapted to receive commands from the first and second application 42, 44, to forward them to the GPU 17 and to return the results back to the applications 42, 44. In other words, the GPU server 32 is the instance in the system 20 that effectively controls the GPU 17.

According to an embodiment, the GPU server 32 is adapted to guarantee that a time critical graphical output of the application 44 is displayed at the next frame. In other words, the driver must schedule these jobs a sufficient time before the deadline, i.e. the next frame. In the following the different steps will be explained how this will be achieved.

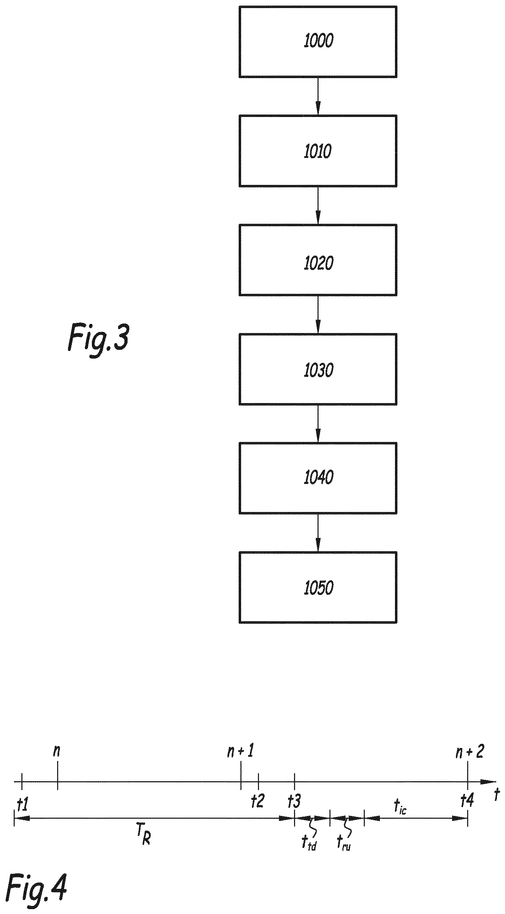

Figure 3 shows schematically a flow chart of method according to the invention. As written here-above, the display has a minimum display frame rate, for example each at least 1/60 second. Figure 4 shows the timeline of two subsequent frames n, n+1 and n+2 to be displayed on the at least one display 13. They are spaced apart from each other according to the display frame rate, for example 1/60 seconds.

In step 1000, the GPU server 32 receives one or more low priority graphical outputs from a first application 42. The GPU server 32 sends the one or more low priority graphical output via the GPU driver 30 to the GPU 17 at a point in time t1.

In a next step 1010, the GPU 17 renders the low priority graphical output and provides one or more (picture) frames n, n+1 to the one or more displays 13. The display shows the frames n and n+1 to the user. For example the low priority graphical output includes a 3D animation, e.g. a map. Further, the one or more low priority graphical outputs include a low priority graphical output for the frame n+2. The GPU 17 renders the one or more low priority graphical outputs during the time T_{R}. In an embodiment, the rendering time of the one or more low priority graphical outputs may need more time than the display frame rate.

In the meantime, at step 1020, for example at a time t2, the GPU server 32 receives a time critical graphical output from the second application 44. In other words, the time critical graphical output is received after the low priority graphical output. After reception, the GPU server 32 sends the time critical graphical output via the GPU driver 30 to the GPU 17. For example, as described here-above, the time critical graphical output includes information that should be displayed at the next possible frame, for example frame n+2. In an embodiment, the time critical graphical output includes information about the current or future state of the vehicle.

Therefore, it is necessary to detect whether low priority graphical output is still rendered by the GPU 17 at a first point in time t3 before the next frame n+2 is provided to the display 13 at a point in time t4, such that the GPU 17 has enough time to render the time critical graphical output.

For that purpose, the GPU server 32 determines the time to render the time critical graphical output t_{IC}. The time to render t_{IC} the time critical job may depend on the size of the graphical output, in particular whether it is a big graphical output or a smaller graphical output. In other words, a graphical output having a larger size needs more time for rendering than a graphical output having a lower size. Further, the time to render may depend on the complexity of the scene to render. According to an example, the time to render for each type of a time critical graphical output by the GPU is measured when conceiving the ECU. Subsequently, the time to render t_{IC} for each type of time critical graphical outputs is stored in the memory 5, for example in a data base. The application 44 may provide different types of time critical graphical outputs having different (graphical) sizes and complexity. Therefore different types of time critical graphical outputs need different time to render. In other embodiments, when several applications 44 are existing, each may also provide different types of time critical graphical outputs having graphically different sizes and complexity.

When receiving a time critical graphical output, e.g. during runtime, the GPU server determines time to render by retrieving the corresponding time to render t_{IC} from the memory 5. For example, the GPU server determines the type of the time critical graphical output, which may depend on the application 44 and/or the content to display, and retrieves the corresponding time to render t_{IC}.

Further, the GPU server 32 retrieves or determines the teardown time t_{td}, which is necessary to detect the situation, in particular, whether the low priority graphic output is still rendered, and to suspend and/or terminate the rendering of that job. This time depends on the type of the GPU 17 and the architecture of the ECU 1. For example the teardown time t_{td} may be stored in the memory 5. Further, the GPU server 32 retrieves or determines the ramp up time tᵣᵤ, which is the time to setup the GPU 17 to be able to run and render the time critical graphical output. In other words, the GPU 17 has to enter a valid state after the previous job has been suspended or terminated at t3. This time may be variable.

Thus, the time to finalize and send the time critical graphical output to the at least one display 13 is t_{IC}+ tᵣᵤ+ t_{td.} Thus, in step 1030 the first point in time t3 is determined, for example using the following formula, if the next frame n+2 is to be rendered at the point in time t4 second: t4- t_{IC}- tᵣᵤ- t_{td.} In other words, the worst case execution time for the time critical job is 1/60s, the time between to two frames.

Then, after the calculation of the first point in time t3, a timer is set by the GPU server 32 to the first point in time.

In step 1040, the timer is compared with the present time. At the expiration of the timer, i.e. at the first point in time t3, the GPU server 32 checks whether the GPU 17 has finished rendering the time critical graphical output, whether the time critical graphical output is still pending, and, in case it is still pending, whether the low priority graphical output is still running or is still in process of being rendered.

In an embodiment, the GPU server 32 achieves this by tracking the jobs or graphical outputs sent to the GPU 17 and checking if the GPU 17 busy and the last job was the low priority graphical output. For example, in case the GPU 17 is busy, the low priority graphical output is still running.

In step 1050, if at the calculated first point in time t3 the GPU 17 still runs or renders the low priority graphical output, the GPU server 32 forces the GPU 17 to render the time critical graphical output. In an embodiment, the GPU server 32 suspends or terminates the rendering of the low priority graphical output by the GPU 17. If a rendering of a graphical output is suspended, the rendering can be continued at a later point in time. If a rendering of a graphical output is terminated the rendering has to be restarted later. It depends on the GPU 17, whether a rendering can be suspended or terminated.

In another embodiment, the GPU server 32 resets the GPU 17 to stop any running jobs and the GPU restarts.

In other words, the GPU server 32 and/or GPU hardware driver 30 take care to bring the GPU 17 into a state that allows to render the time critical graphical output. In other words, the GPU server 32 and/or GPU hardware driver 30 must be able to restore a valid state of the GPU 17.

According to an embodiment, the time critical graphical output does not have any dependency on a previous rendering job or graphical output. A dependency may be, for example, a graphical output which depends on a previous graphical output, so that only the buffer which has changed has to be written.

In the worst case scenario, the second application 44 is informed, for example at the first point in time t3, that the GPU 17 is not able to render the time critical output. In that case, the second application 44 instructs the CPU 3 to render the time critical graphical output, which is then displayed on the screen 13. However, then the GPU 17 is not used.

In the description only two applications are shown providing graphical output. However, the system may comprise even more applications on more than two guest systems for providing time critical graphical output and/or low priority graphical output.

## Claims

1. Method for controlling a graphic processing unit, GPU, (17) in a control unit (1) the control unit comprising at least one central processing unit, CPU, the at least one CPU (3) having access to at least one memory (5); the GPU (17) being connected to and controlled by the at least one CPU (3), wherein the GPU (17) is adapted to provide frames to at least one display (13) having a predetermined output display frame rate, the method comprising:
receiving (1000), by a GPU server (32) running on the CPU (3), a low priority graphical output from a first application (42),
providing, by the GPU server (32), the low priority graphical output to the GPU (17) to render and provide one or more frames to the at least one display (13),
starting (1010), by the GPU (17), the rendering of the low priority graphical output,
receiving (1020), by the GPU server (32), a time critical graphical output from a second application (44), wherein the time critical graphical output is received after the low priority graphical output;
determining a first point in time (t3) before a next frame (n+2) to be provided to the at least one display (13) based on second point in time (t4), when the next frame (n+2) is to be provided to the at least one display (13), such that the time between the first point in time (t3) and the second point in time (t4) corresponds to the time required to finalize and send the time critical graphical output to the at least one display (13) using the GPU (17); and
forcing (1050), at the determined first point in time (t3), by the GPU server (32), the GPU (17) to render the time critical graphical output, if at the determined first point in time the GPU (17) still renders the low priority graphical output.

2. Method according to claim 1, further comprising:
running a virtualization layer (28) on the at least one CPU (3), the virtualization layer (28) assigning processor time and memory space to a plurality of guest systems (22, 24, 26),
running a first guest system (24) on the virtualization layer, the first application (42) running in the first guest system (24); and
running a second guest system (26) on the virtualization layer, the second application (44) running in the second guest system (26).

3. Method according to claim 2, wherein the second guest system (26) is a real time operating system, in particular an automotive operating system.

4. Method according to any one of the claims 2 or 3, wherein the first guest system (24) is a non-real time operating system).

5. Method according to any one of the claims 2 to 4, further comprising:
running a third guest system (22) on the virtualizing layer (28), wherein the GPU server (32) is running on the third guest system (22), the first and second applications (42, 44) connecting the GPU server (32) via at least one inter partition communication (34, 36), in particular via a respective virtual graphic driver (38, 40) running in the respective first and second guest systems (24, 26).

6. Method according to any one of the preceding claims, wherein the predetermined output display frame rate is at least 50 frames per second.

7. Method according to any one of the preceding claims, wherein the time required to finalize and send the time critical graphical output to the at least one display (13) includes at least
a time to bring the GPU (17) into a state that allows to render the time critical graphical output, for example a time to detect the graphical output currently rendered, a time (t_{td}) to suspend or terminate the low priority graphical output and/or the time (tᵣᵤ) to setup the GPU to be able to run the time critical graphical output, and/or
the time (t_{IC}) to render the time critical graphical output.

8. Method according to any one of the preceding claims, wherein forcing, by the GPU server (32), the GPU (17) to render the time critical graphical output, includes:
suspending and/or terminating a rendering of the low priority graphical output; and/or resetting the GPU (17).

9. Method according to any one of the preceding claims, further comprising:
providing the time critical graphical output to the at least one display (13).

10. Method according to any one of the preceding claims, wherein the time critical graphical output includes information about the current or future state of a vehicle, in particular an automotive vehicle, comprising the graphic processing unit (17), wherein, in particular the information includes, a speed of the vehicle, a temperature of a working fluid, a distance to an obstacle, a warning about a malfunction, a rotational speed of a motor and/or a liquid level.

11. Computer program product comprising commands for executing the method according any one of the preceding claims, when loaded and executed on one or more CPUs (3).

12. System for an embedded control unit, comprising :
at least one central processing unit (3), CPU, the at least one processor having access to at least one memory (5);
a graphic processing unit, GPU, (17) connected to and controlled by the at least one CPU (3), wherein the GPU (17) is adapted to provide frames to a display (13) having a predetermined output display frame rate;
a GPU server (32) having access to the GPU;
a first application (42) adapted to produce a low priority graphical output and to provide the low priority graphical output to the GPU server (32);
a second application (44) adapted to produce a time critical graphical output and to provide the time critical graphical output to the GPU server (32);
wherein the system is adapted to execute a method according to any one of the claims 1 to 10.

13. Automotive vehicle including a system according to one of the claim 12.

## Patentansprüche

1. Verfahren zur Steuerung einer Grafikverarbeitungseinheit, GPU, (17) in einer Steuereinheit (1), wobei die Steuereinheit mindestens eine zentrale Verarbeitungseinheit, CPU, umfasst, die mindestens eine CPU (3) Zugriff auf mindestens einen Speicher (5) hat; die GPU (17) mit der mindestens einen CPU (3) verbunden ist und dadurch gesteuert wird, wobei die GPU (17) so ausgelegt ist, dass sie Frames für mindestens eine Anzeige (13) mit einer vorbestimmten Anzeige-Frameausgaberate bereitstellt, wobei das Verfahren umfasst:
Empfangen (1000) durch einen GPU-Server (32), der auf der CPU (3) ausgeführt wird, einer grafischen Ausgabe mit niedriger Priorität von einer ersten Anwendung (42),
Bereitstellen durch den GPU-Server (32) der grafischen Ausgabe mit niedriger Priorität für die GPU (17), um einen oder mehrere Frames wiederzugeben und für die mindestens eine Anzeige (13) bereitzustellen,
Starten (1010) durch die GPU (17) der Wiedergabe der grafischen Ausgabe mit niedriger Priorität,
Empfangen (1020) durch den GPU-Server (32) einer zeitkritischen grafischen Ausgabe von einer zweiten Anwendung (44), wobei die zeitkritische grafische Ausgabe nach der grafischen Ausgabe mit niedriger Priorität empfangen wird;
Bestimmen eines ersten Zeitpunkts (t3), bevor ein nächster Frame (n + 2) für die mindestens eine Anzeige (13) bereitgestellt wird, basierend auf einem zweiten Zeitpunkt (t4), zu dem der nächste Frame (n + 2) für die mindestens eine Anzeige (13) bereitgestellt werden soll, derart dass die Zeit zwischen dem ersten Zeitpunkt (t3) und dem zweiten Zeitpunkt (t4) der Zeit entspricht, die erforderlich ist, um die zeitkritische grafische Ausgabe unter Verwendung der GPU (17) zu beenden und an die mindestens eine Anzeige (13) zu senden; und Zwingen (1050) der GPU (17) zum bestimmten Zeitpunkt (t3) durch den GPU-Server (32) zur Wiedergabe der zeitkritischen grafischen Ausgabe, wenn die GPU (17) zum bestimmten erster Zeitpunkt immer noch die grafische Ausgabe mit niedriger Priorität wiedergibt.

2. Verfahren nach Anspruch 1, ferner umfassend:
Ausführen einer Virtualisierungsschicht (28) auf der mindestens einen CPU (3), wobei die Virtualisierungsschicht (28) einer Mehrzahl von Gastsystemen (22, 24, 26) Prozessorzeit und Speicherplatz zuordnet,
Ausführen eines ersten Gastsystems (24) auf der Virtualisierungsschicht, wobei die erste Anwendung (42) im Gastsystem (24) ausgeführt wird; und
Ausführen eines zweiten Gastsystems (26) auf der Virtualisierungsschicht, wobei die zweite Anwendung (44) im zweiten Gastsystem (26) ausgeführt wird.

3. Verfahren nach Anspruch 2, wobei das zweite Gastsystem (26) ein Echtzeitbetriebssystem, insbesondere ein Kraftfahrzeugbetriebssystem ist.

4. Verfahren nach einem der Ansprüche 2 oder 3, wobei das erste Gastsystem (24) ein Nicht-Echtzeitbetriebssystem ist.

5. Verfahren nach einem der Ansprüche 2 bis 4, ferner umfassend:
Ausführen eines dritten Gastsystems (22) auf der Virtualisierungsschicht (28), wobei der GPU-Server (32) auf dem dritten Gastsystem (22) ausgeführt wird, die ersten und zweiten Anwendungen (42, 44) den GPU-Server (32) über mindestens eine Inter-Partitions-Kommunikation (34, 36), insbesondere über einen jeweiligen virtuellen Grafiktreiber (38, 40), der in den jeweiligen ersten und zweiten Gastsystemen (24, 26) ausgeführt wird, verbinden.

6. Verfahren nach einem der vorhergehenden Ansprüche, wobei die vorbestimmte Anzeige-Frameausgaberate mindestens 50 Frames pro Sekunde beträgt.

7. Verfahren nach einem der vorhergehenden Ansprüche, wobei die Zeit, die zum Beenden und Senden der zeitkritischen grafischen Ausgabe, die an die mindestens eine Anzeige (13) ausgeben wird, erforderlich ist, mindestens umfasst:
eine Zeit, um die GPU (17) in einen Zustand zu versetzen, der eine Wiedergabe der zeitkritischen grafischen Ausgabe ermöglicht, zum Beispiel eine Zeit zum Erkennen der grafischen Ausgabe, die gerade wiedergegeben wird, eine Zeit (t_{td}) zum Unterbrechen oder Abbrechen der grafischen Ausgabe mit niedriger Priorität und/oder die Zeit (tᵣᵤ) zum Einrichten der GPU, damit sie zum Ausführen der zeitkritischen grafischen Ausgabe in der Lage ist, und/oder
die Zeit (t_{IC}) zum Wiedergeben der zeitkritischen grafischen Ausgabe.

8. Verfahren nach einem der vorhergehenden Ansprüche, wobei das Zwingen der CPU (17) durch den GPU-Server (32) zur Wiedergabe der zeitkritischen grafischen Ausgabe umfasst:
Unterbrechen und/oder Abbrechen einer Wiedergabe der grafischen Ausgabe mit niedriger Priorität; und/oder
Rücksetzen der GPU (17).

9. Verfahren nach einem der vorhergehenden Ansprüche, ferner umfassend:
Bereitstellen der zeitkritischen grafischen Ausgabe für die mindestens eine Anzeige (13).

10. Verfahren nach einem der vorhergehenden Ansprüche, wobei die zeitkritische grafische Ausgabe Informationen über den aktuellen oder zukünftigen Zustand eines Fahrzeugs, insbesondere eines Kraftfahrzeugs umfasst, das die Grafikverarbeitungseinheit (17) umfasst, wobei die Informationen insbesondere eine Geschwindigkeit des Fahrzeugs, eine Temperatur eines Arbeitsfluids, einen Abstand zu einem Hindernis, eine Warnung hinsichtlich einer Fehlfunktion, eine Drehzahl eines Motors und/oder einen Flüssigkeitsstand umfassen.

11. Computerprogrammprodukt, umfassend Befehle zum Ausführen des Verfahrens nach einem der vorhergehenden Ansprüche, wenn in eine oder mehrere CPUs (3) geladen und darin ausgeführt.

12. System für eine eingebettete Steuereinheit, umfassend:
mindestens eine zentrale Verarbeitungseinheit, CPU, (3), wobei der mindestens eine Prozessor Zugriff auf mindestens einen Speicher (5) hat;
eine Grafikverarbeitungseinheit, GPU, (17), die mit der mindestens einen CPU (3) verbunden ist und dadurch gesteuert wird, wobei die GPU (17) so ausgelegt ist, dass sie Frames für eine Anzeige (13) mit einer vorbestimmten Anzeige-Frameausgaberate bereitstellt;
einen GPU-Server (32) mit Zugriff auf die GPU;
eine erste Anwendung (42), die zum Erzeugen einer grafischen Ausgabe mit niedriger Priorität und zum Bereitstellen der grafischen Ausgabe mit niedriger Priorität für den GPU-Server (32) ausgelegt ist;
eine zweite Anwendung (44), die zum Erzeugen einer zeitkritischen grafischen Ausgabe und zum Bereitstellen der zeitkritischen grafischen Ausgabe für den GPU-Server (32) ausgelegt ist;
wobei das System so ausgelegt ist, dass es ein Verfahren nach einem der Ansprüche 1 bis 10 ausführt.

13. Kraftfahrzeug, umfassend ein System nach einem des Anspruchs 12.

## Revendications

1. Procédé pour commander une unité de traitement graphique, GPU, (17) dans une unité de commande (1), l'unité de commande comprenant au moins une unité centrale, CPU, ladite au moins une CPU (3) ayant accès à au moins une mémoire (5) ; la GPU (17) étant connectée à ladite au moins une CPU (3) et commandée par celle-ci, dans lequel la GPU (17) est conçue pour fournir des trames à au moins un afficheur (13) ayant une fréquence de trames d'affichage de sortie prédéterminée, le procédé comprenant :
la réception (1000), par un serveur de GPU (32) s'exécutant sur la CPU (3), d'une sortie graphique à faible priorité d'une première application (42),
la fourniture, par le serveur de GPU (32), de la sortie graphique à faible priorité à la GPU (17) pour reproduire et fournir une ou plusieurs trames audit au moins un afficheur (13),
le commencement (1010), par la GPU (17), de la reproduction de la sortie graphique à faible priorité,
la réception (1020), par le serveur de GPU (32), d'une sortie graphique temporellement critique d'une deuxième application (44), dans lequel la sortie graphique temporellement critique est reçue après la sortie graphique à faible priorité ;
la détermination d'un premier instant (t3) avant une trame suivante (n+2) à fournir audit au moins un afficheur (13) sur la base d'un deuxième instant (t4), lorsque la trame suivante (n+2) doit être fournie audit au moins un afficheur (13), de sorte que le temps entre le premier instant (t3) et le deuxième instant (t4) corresponde au temps requis pour finaliser et envoyer la sortie graphique temporellement critique audit au moins un afficheur (13) en utilisant la GPU (17) ; et
le forçage (1050), au premier instant (t3) déterminé, par le serveur de GPU (32), de la reproduction par la GPU (17) de la sortie graphique temporellement critique, si au premier instant déterminé la GPU (17) effectue encore la reproduction de la sortie graphique à faible priorité.

2. Procédé selon la revendication 1, comprenant en outre :
l'exécution d'une couche de virtualisation (28) sur ladite au moins une CPU (3), la couche de virtualisation (28) attribuant un temps de processeur et un espace de mémoire à une pluralité de systèmes invités (22, 24, 26),
l'exécution d'un premier système invité (24) sur la couche de virtualisation, la première application (42) s'exécutant dans le premier système invité (24) ; et
l'exécution d'un deuxième système invité (26) sur la couche de virtualisation, la deuxième application (44) s'exécutant dans le deuxième système invité (26).

3. Procédé selon la revendication 2, dans lequel le deuxième système invité (26) est un système d'exploitation en temps réel, en particulier un système d'exploitation d'automobile.

4. Procédé selon l'une quelconque des revendications 2 et 3, dans lequel le premier système invité (24) est un système d'exploitation non en temps réel.

5. Procédé selon l'une quelconque des revendications 2 à 4 comprenant en outre :
l'exécution d'un troisième système invité (22) sur la couche de virtualisation (28), dans lequel le serveur de GPU (32) s'exécute sur le troisième système invité (22), les première et deuxième applications (42, 44) connectant le serveur de GPU (32) par l'intermédiaire d'au moins une communication entre partitions (34, 36), en particulier par l'intermédiaire d'un pilote graphique virtuel (38, 40) respectif s'exécutant dans les premier et deuxième systèmes invités (24, 26) respectifs.

6. Procédé selon l'une quelconque des revendications précédentes, dans lequel la fréquence de trames d'affichage de sortie prédéterminée est d'au moins 50 trames par seconde.

7. Procédé selon l'une quelconque des revendications précédentes, dans lequel le temps requis pour finaliser et envoyer la sortie graphique temporellement critique audit au moins un afficheur (13) comprend au moins
un temps pour amener la GPU (17) dans un état qui permet de reproduire la sortie graphique temporellement critique, par exemple un temps pour détecter la sortie graphique actuellement reproduite, un temps (t_{td}) pour mettre en attente ou terminer la sortie graphique à faible priorité et/ou le temps (tᵣᵤ) pour configurer la GPU pour qu'elle soit capable d'exécuter la sortie graphique temporellement critique, et/ou
le temps (t_{IC}) pour reproduire la sortie graphique temporellement critique.

8. Procédé selon l'une quelconque des revendications précédentes, dans lequel le forçage, par le serveur de GPU (32), de la reproduction par la GPU (17) de la sortie graphique temporellement critique, comprend :
la mise en attente et/ou la terminaison d'une reproduction de la sortie graphique à faible priorité ; et/ou
la réinitialisation de la GPU (17).

9. Procédé selon l'une quelconque des revendications précédentes, comprenant en outre :
la fourniture de la sortie graphique temporellement critique audit au moins un afficheur (13).

10. Procédé selon l'une quelconque des revendications précédentes, dans lequel la sortie graphique temporellement critique comprend des informations concernant un état actuel ou futur d'un véhicule, en particulier d'un véhicule automobile, comprenant l'unité de traitement graphique (17), dans lequel, en particulier les informations comprennent, une vitesse du véhicule, une température d'un fluide de travail, une distance jusqu'à un obstacle, un avertissement concernant un dysfonctionnement, une vitesse de rotation d'un moteur et/ou un niveau de liquide.

11. Produit-programme d'ordinateur comprenant des commandes pour exécuter le procédé selon l'une quelconque des revendications précédentes, lorsqu'il est chargé et exécuté sur une ou plusieurs CPU (3).

12. Système pour une unité de commande intégrée, comprenant :
au moins une unité centrale (3), CPU, ledit au moins un processeur ayant accès à au moins une mémoire (5) ;
une unité de traitement graphique, GPU, (17) connectée à ladite au moins une CPU (3) et commandée par celle-ci, dans lequel la GPU (17) est conçue pour fournir des trames à un afficheur (13) ayant une fréquence de trames d'affichage de sortie prédéterminée ;
un serveur de GPU (32) ayant un accès à la GPU ;
une première application (42) conçue pour produire une sortie graphique à faible priorité et pour fournir la sortie graphique à faible priorité au serveur de GPU (32) ;
une deuxième application (44) conçue pour produire une sortie graphique temporellement critique et pour fournir la sortie graphique temporellement critique au serveur de GPU (32) ;
dans lequel le système est conçu pour exécuter un procédé selon l'une quelconque des revendications 1 à 10.

13. Véhicule automobile comprenant un système selon la revendication 12.
